# EUROPÄISCHE PATENTANMELDUNG

(11) **EP 4 576 594 A1**
(43) Veröffentlichungstag der Anmeldung: **25.06.2025**
(21) Anmeldenummer: 23217456.5
(22) Anmeldetag: 18.12.2023
(51) Int. Cl.: H04B 3/54, B23K 9/10

(54) **VERFAHREN UND VORRICHTUNG ZUR ÜBERTRAGUNG VON DATEN ZWISCHEN SCHALTUNGSMODULEN EINES ELEKTRISCHEN GERÄTS**

(71) Anmelder: FRONIUS INTERNATIONAL GmbH, 4643 Pettenbach (AT)
(72) Erfinder: DEGNER, Lucas, 4643 Pettenbach (AT); FASTHUBER, Christian, 4643 Pettenbach (AT)
(74) Vertreter: SONN Patentanwälte GmbH & Co KG

(57) **Zusammenfassung**

Die Erfindung betrifft ein Verfahren und eine Vorrichtung zur Übertragung von Daten (D) zwischen Schaltungsmodulen (10) eines elektrischen Geräts (1), welche Schaltungsmodule (10) jeweils eine Steuereinrichtung (11) mit einem Speicher (12) und einer digitalen Schnittstelle (13) enthalten und mit Energieversorgungsleitungen (14) verbunden sind. Erfindungsgemäß ist in jedem Schaltungsmodul (10) eine Koppelschaltung (15) vorgesehen und sind die Daten (D) über die Energieversorgungsleitungen (14) übertragbar, indem die Steuereinrichtung (10) jedes Schaltungsmoduls (10) zum Senden der Daten (D) zum Verarbeiten der Daten (D) und zur Bildung eines Modulationssignals (M) aus den verarbeiteten Daten (D') mit einem Taktsignal (T) und zur Weiterleitung des Modulationssignals (M) über die digitale Schnittstelle (13) und zur Einkopplung des Modulationssignals (M) über die Koppelschaltung (15) in die Energieversorgungsleitungen (14) und zum Empfangen zum Auskoppeln des Modulationssignals (M) aus den Energieversorgungsleitungen (14) über die Koppelschaltung (15), dem Übertragen des Modulationssignals (M) über die digitale Schnittstelle (13) der Steuereinrichtung (11), zum Demodulieren des Modulationssignals (M) und daraus zum Extrahieren der Daten (D) ausgebildet ist.

## Beschreibung

Die Erfindung betrifft ein Verfahren zur Übertragung von Daten zwischen Schaltungsmodulen eines elektrischen Geräts, beispielsweise eines Schweißgeräts, welche Schaltungsmodule jeweils eine Steuereinrichtung mit einem Speicher und einer digitalen Schnittstelle enthalten und mit Energieversorgungsleitungen verbunden sind.

Weiters betrifft die Erfindung eine Vorrichtung zur Übertragung von Daten zwischen Schaltungsmodulen eines elektrischen Geräts, beispielsweise eines Schweißgeräts, welche Schaltungsmodule jeweils eine Steuereinrichtung mit einem Speicher und einer digitalen Schnittstelle enthalten und mit Energieversorgungsleitungen verbunden sind.

Die Erfindung betrifft verschiedenste elektrische Geräte mit mehreren Schaltungsmodulen, zwischen welchen Daten übertragen werden sollen. Beispielsweise bestehen elektrische Schweißgeräte aus einer Schweißstromquelle mit mehreren Schaltungsmodulen oder Platinen, wie zum Beispiel einer Steuereinrichtung und einem Netzteil sowie einem Drahtvorschub, welcher wiederum aus mehreren Schaltungsmodulen oder Platinen bestehen kann. Die Erfindung ist aber nicht auf Schaltungsmodule von Schweißgeräten beschränkt, sondern kann verschiedenste andere elektrische Geräte betreffen, wie zum Beispiel Wechselrichter, insbesondere Photovoltaik-Wechselrichter, oder Batterieladegeräte.

Zur Übertragung von Daten zwischen Schaltungsmodulen innerhalb eines elektrischen Geräts werden üblicherweise separate Datenleitungen mit angepassten Steckern und Protokollen (z.B. RS-485, CAN, Ethernet, etc.) verwendet. Steckverbinder benötigen Platz, sind kostenintensiv und oft auch fehleranfällig, da durch mechanische Einflüsse, wie Vibrationen oder Stöße, und thermische Einflüsse die Kontaktierung beeinflusst wird. Durch die voranschreitende Miniaturisierung von Leiterplatten wird auch der Platzbedarf der Steckverbinder zunehmend zum Problem. Somit stellen Steckverbindungen eine Quelle für Fehler verschiedenster Arten das, welche von Wackelkontakten bis zum Totalausfall des elektrischen Geräts reichen können.

Die WO 2014/009380 A2 beschreibt einen verbesserten Steckverbinder zur Übertragung von Daten zwischen zwei Verbindern, wobei Permanentmagnete für eine mechanische Fixierung der Verbinder zum Einsatz kommen.

Eine Datenübertragung zwischen verschiedenen elektrischen Geräten über Energieversorgungsleitungen, die sogenannte Powerline Communication (PLC), ist eine mittlerweile etablierte Technik, wobei die Herausforderungen durch Störungen und sich ändernde Impedanzen zu meist kostenintensiven Lösungen führen. Innerhalb elektrischer Geräte wird zur Kommunikation zwischen einzelnen Schaltungsmodulen deshalb normalerweise keine PLC verwendet.

Die WO 02/073568 A1 beschreibt eine Vorrichtung zur Datenübertragung zwischen Fahrzeugsensoren, wobei die Datenübertragung via Powerline über digitale Schnittstellen erwähnt wird.

Die Aufgabe der vorliegenden Erfindung besteht in der Schaffung eines oben genannten Verfahrens und einer oben genannten Vorrichtung zur Übertragung von Daten zwischen Schaltungsmodulen eines elektrischen Geräts, welche die oben erwähnten Probleme von Steckverbindungen vermeiden oder zumindest reduzieren.

Gelöst wird die erfindungsgemäße Aufgabe in verfahrensmäßiger Hinsicht dadurch, dass die Daten über die Energieversorgungsleitungen übertragen werden, wobei zum Senden die Daten in der Steuereinrichtung des Schaltungsmoduls verarbeitet, aus den verarbeiteten Daten mit einem Taktsignals ein Modulationssignal gebildet wird, und das Modulationssignal über die digitale Schnittstelle der Steuereinrichtung weitergeleitet und über eine im Schaltungsmodul vorgesehene Koppelschaltung in die Energieversorgungsleitungen eingekoppelt wird, und zum Empfangen das Modulationssignal über die Koppelschaltung aus den Energieversorgungsleitungen ausgekoppelt und über die digitale Schnittstelle der Steuereinrichtung empfangen wird, und das Modulationssignal über die Steuereinrichtung demoduliert und daraus die Daten extrahiert werden. Durch die Übertragung der Daten über die vorhandenen Energieversorgungsleitungen kann auf Steckverbindungen verzichtet werden und können somit die damit verbundenen Probleme eliminiert werden. Insbesondere können mechanische Probleme der Steckverbindungen, wie Wackelkontakte oder ein Totalausfall der Steckverbindung verhindert werden und der Platzbedarf und die Kosten für solche Stecker und Buchsen eliminiert werden. Andererseits kann durch eine optimale und kreative Ausnutzung der vorhandenen Steuereinrichtung und deren digitaler Schnittstelle der Aufwand für die Datenübertragung via Powerline über die Energieversorgungsleitungen sehr gering gehalten werden. Der Aufwand beschränkt sich auf eine softwaremäßige Implementierung der Datenverarbeitung und Modulation sowie Demodulation und Datenextraktion und auf eine hardwaremäßige Implementierung einer einfach aufgebauten und günstigen Koppelschaltung zum Einkoppeln des Modulationssignals in die Energieversorgungsleitungen beim Senden der Daten bzw. zum Auskoppeln des Modulationssignals aus den Energieversorgungsleitungen beim Empfang der Daten. Die Modulation bzw. Bildung des Modulationssignals erfolgt in zwei Schritten, wobei im ersten Modulationsschritt aus den Daten ein Datenpaket bzw. verarbeitete Daten gebildet werden und im zweiten Modulationsschritt die verarbeiteten Daten mit einem Taktsignal bzw. einer Timing Information zum Modulationssignal M ergänzt bzw. das Modulationssignal M gebildet wird, welches dann über die Energieversorgungsleitungen übertragen wird. Beim Empfangen der Daten werden in zwei Demodulationsschritten zunächst aus den Energieversorgungsleitungen ausgekoppelten Modulationssignal die Datenpakete bzw. verarbeiteten Daten gewonnen und daraus die Daten extrahiert. Somit sind keine eigenen Steckverbinder für die Datenübertragung zwischen den Schaltungsmodulen notwendig, da die Daten über die vorhandenen Energieversorgungsleitungen übertragen werden. Auch wenn die Energieversorgungsleitungen üblicherweise ebenfalls über Steckverbinder mit den Schaltungsmodulen verbunden sind, sind diese Steckverbindungen meist größer und robuster als Datensteckverbinder und durch die reduzierte Anzahl an Steckkontakten wird auch die Wahrscheinlichkeit eines Kontaktfehlers stark reduziert. Unter verarbeiteten Daten versteht man beispielsweise Datenpakete aus einer vorgegebenen Anzahl an Daten.

Das Modulationssignal kann über eine induktive Koppelschaltung, insbesondere einen Übertrager, induktiv in die Energieversorgungsleitungen eingekoppelt bzw. aus den Energieversorgungsleitungen ausgekoppelt werden. Diese induktive Kopplung wird vorrangig bei Wechselstrom-Energieversorgungsleitungen Anwendung finden und ist sehr einfach und kostengünstig realisierbar.

Alternativ dazu kann das Modulationssignal auch über eine kapazitive Koppelschaltung kapazitiv in die Energieversorgungsleitungen eingekoppelt bzw. aus den Energieversorgungsleitungen ausgekoppelt werden. Diese Kopplungsmethode wird vorrangig bei Gleichstrom-Energieversorgungsleitungen zum Einsatz kommen.

Auch Mischformen zwischen der induktiven und kapazitiven Koppelschaltung sind möglich bzw. durch parasitäre Kapazitäten bei einem induktiven Übertragungselement auch die Realität.

Die verarbeiteten Daten werden vorzugsweise über ein nicht-kohärentes Modulationsverfahren moduliert bzw. demoduliert. Bei einem nicht-kohärenten Modulationsverfahren ist keine Rekonstruktion des Taktsignals bzw. Trägersignals notwendig, wodurch das Verfahren einfacher umsetzbar ist. Insbesondere eignen sich differentielle Modulationsverfahren. Besonders bevorzugt wird ein DBPSK (Differential Binary Phase Shift Keying)-Verfahren verwendet. Das charakteristische Merkmal dieser Modulationsart ist, dass beim Demodulator keine Notwendigkeit besteht, ein phasensynchrones Trägersignal zu erzeugen. Die Rekonstruktion des Datensignals kann beispielsweise relativ einfach durch eine Multiplikation des empfangenen Modulationssignals mit einem um eine Bitzeit verzögerten Signal und eine Tiefpassfilterung des höherfrequenten Teils des Digitalsignals erfolgen.

Das Modulationssignal wird aus den verarbeiteten Daten vorzugsweise mit einem Taktsignal mit einer bestimmten Trägerfrequenz zwischen 100 kHz und 10 MHz gebildet. Diese Frequenzen stellen einen idealen und leicht realisierbaren Bereich dar. Die Obergrenze der Trägerfrequenz wird durch die digitale Schnittstelle der Steuereinrichtung des Schaltungsmoduls des elektrischen Geräts festgelegt werden. Beispielsweise begrenzt die SPI (Serial Peripheral Interface)-Schnittstelle eines Mikrocontrollers des Schaltungsmoduls die maximal zulässige Frequenz des Trägersignals und somit den Takt mit dem die Daten übertragen werden können.

Vorteilhafter Weise werden die Daten zu Datenpaketen vorgegebener Länge verarbeitet. Dies erleichtert die Verarbeitung und Extraktion der Daten und den dafür notwendigen softwaremäßigen Aufwand.

Gemäß einem Merkmal der Erfindung werden die Daten mit einer Datenübertragungsrate von maximal 1 MBit/s und mit einer Verzögerung von maximal 100 ms über die Energieversorgungsleitungen übertragen. Dies sind Grenzwerte, welche bei den meisten Anwendungen auf dem Gebiet der vorliegenden Erfindung ausreichen.

Wenn das Modulationssignal vor dem Einkoppeln in die Energieversorgungsleitungen bzw. nach dem Auskoppeln aus den Energieversorgungsleitungen gefiltert wird, kann eine hohe Qualität der übertragenen Daten und eine niedrige Fehlerrate erzielt werden. Den. Als Filter kommen sowohl analoge als auch digitale Filter in Frage. Sendeseitig und empfangsseitig kommen insbesondere Tiefpassfilter, vorzugsweise Tiefpassfilter zweiter Ordnung, zur Glättung des Signals zur Anwendung.

Von Vorteil ist weiters, wenn das Modulationssignal vor dem Einkoppeln in die Energieversorgungsleitungen bzw. nach dem Auskoppeln aus den Energieversorgungsleitungen verstärkt wird. Als Verstärker kommen einfache Operationsverstärker, vorzugsweise mit einer Beschaltung aus einem Widerstand und einem Kondensator zur Kompensation der kapazitiven Belastung zur Anwendung. Darüber hinaus ist es beim Empfang der Daten von Vorteil, wenn das empfangene Signal nach einer Verstärkung und Filterung in einem Formierer ("Shaper") geformt, insbesondere digitalisiert, wird.

Die vorliegende Erfindung ist insbesondere für die Übertragung von Daten über die Energieversorgungsleitungen mit einer geringen Länge von weniger als 10 m gedacht. Für die Datenübertragung zwischen Schaltungsmodulen eines Schweißgeräts werden Längen unter 1 m ausreichend sein. Bei einer Übertragung über längere Schlauchpakete können die Daten unter Umständen auch über einige Meter übertragen werden müssen. Für die Übertragung über größere Entfernungen sind andere Verfahren zweckmäßiger.

Wie bereits oben erwähnt, kann es sich bei den Energieversorgungsleitungen sowohl um Gleichstrom-Energieversorgungsleitungen als auch Wechselstrom-Energieversorgungsleitungen handeln. Je nach Art der Energieversorgung (Gleichstrom oder Wechselstrom) wird die Kopplungsschaltung (induktiv, kapazitiv, Mischform) gewählt werden.

Gelöst wird die Aufgabe auch durch eine oben genannte Vorrichtung, wobei in jedem Schaltungsmodul eine Koppelschaltung vorgesehen ist und die Daten über die Energieversorgungsleitungen übertragbar sind, indem die Steuereinrichtung jedes Schaltungsmoduls zum Senden der Daten zum Verarbeiten der Daten und zur Bildung eines Modulationssignals aus den verarbeiteten Daten mit einem Taktsignals und zur Weiterleitung des Modulationssignals über die digitale Schnittstelle und zur Einkopplung des Modulationssignals über die Koppelschaltung in die Energieversorgungsleitungen und zum Empfangen zum Auskoppeln des Modulationssignals aus den Energieversorgungsleitungen über die Koppelschaltung, dem Übertragen des Modulationssignals über die digitale Schnittstelle der Steuereinrichtung, zum Demodulieren des Modulationssignals und daraus zum Extrahieren der Daten ausgebildet ist. Mit Ausnahme einer Koppelschaltung und allfälligen Filtern und/oder Verstärkern und allenfalls Formierer kann die Erfindung softwaremäßig implementiert werden, indem die vorhandene Steuereinrichtung, insbesondere ein Mikrocontroller, entsprechend programmiert wird. Somit ist die Datenübertragung sehr einfach und kostengünstig ohne eigene Steckverbindungen für die Datenübertragung über die vorhandenen Energieversorgungsleitungen möglich. Zu den weiteren dadurch erzielbaren Vorteilen wird auf die obige Beschreibung des Verfahrens zur Datenübertragung verwiesen.

Gemäß einem weiteren Merkmal der Erfindung ist die Steuereinrichtung jedes Schaltungsmoduls durch einen Mikrocontroller mit einer SPI (Serial Peripheral Interface)-Schnittstelle als digitale Schnittstelle gebildet. Die vorliegende Erfindung verwendet die vorhandene SPI-Schnittstelle jedes Mikrocontrollers jedes Schaltungsmoduls in kreativer Weise für die Datenübertragung.

Wie bereits oben erwähnt, kann die Koppelschaltung durch eine induktive Koppelschaltung, insbesondere einen Übertrager, eine kapazitive Koppelschaltung, oder eine Mischform einer kapazitiven und induktiven Koppelschaltung gebildet sein.

Idealerweise ist die Steuereinrichtung der Schaltungsmodule zur Modulation bzw. Demodulation der verarbeiteten Daten über ein nicht-kohärentes Modulationsverfahren, insbesondere ein differentielles Modulationsverfahren, besonders bevorzugt durch ein DBPSK (Differential Binary Phase Shift Keying)-Verfahren ausgebildet.

Wenn in jedem Schaltungsmodul ein Filter, insbesondere ein Tiefpassfilter, besonders bevorzugt ein Tiefpassfilter zweiter Ordnung, zum Filtern des Modulationssignals vor dem Einkoppeln in die Energieversorgungsleitungen bzw. nach dem Auskoppeln aus den Energieversorgungsleitungen vorgesehen ist, kann die Qualität der Daten bei der Übertragung erhöht und die Fehlerrate reduziert werden.

Zur Verbesserung der Datenübertragung kann in jedem Schaltungsmodul auch ein Verstärker, insbesondere ein Operationsverstärker, zum Verstärken des Modulationssignals vor dem Einkoppeln in die Energieversorgungsleitungen bzw. nach dem Auskoppeln aus den Energieversorgungsleitungen vorgesehen sein. Dadurch wird zwar der hardwaretechnische Aufwand etwas erhöht, dafür die Qualität der übertragenen Daten verbessert. Darüber hinaus kann ein Formierer ("Shaper") zum Formen bzw. Digitalisieren des empfangenen Signals nach einer Verstärkung und Filterung vorgesehen sein.

In der Regel weisen die Energieversorgungsleitungen eine Länge von weniger als 10 m auf.

Die Energieversorgungsleitungen können sowohl durch Gleichstrom-Energieversorgungsleitungen als auch durch Wechselstrom-Energieversorgungsleitungen gebildet sein.

Die Erfindung wird anhand der beigefügten Zeichnungen näher erläutert. Darin zeigen:
- Fig. 1: ein Blockschaltbild dreier Schaltungsmodule eines elektrischen Geräts, mit Datenübertragungsleitungen gemäß dem Stand der Technik;
- Fig. 2: ein Blockschaltbild dreier Schaltungsmodule eines elektrischen Geräts, wobei die Datenübertragung erfindungsgemäß über die Energieversorgungsleitungen erfolgt;
- Fig. 3A bis 3C: verschiedene Varianten einer Koppelschaltung;
- Fig. 4: ein detaillierteres Blockschaltbild zweier Schaltungsmodule, welche zur Durchführung des erfindungsgemäßen Verfahrens zur Datenübertragung über die Energieversorgungsleitungen ausgebildet sind;
- Fig. 5: ein detailliertes Blockschaltbild einer Steuereinrichtung eines Schalungsmoduls; und
- Fig. 6: ein Flussdiagramm zur Veranschaulichung des erfindungsgemäßen Verfahrens.

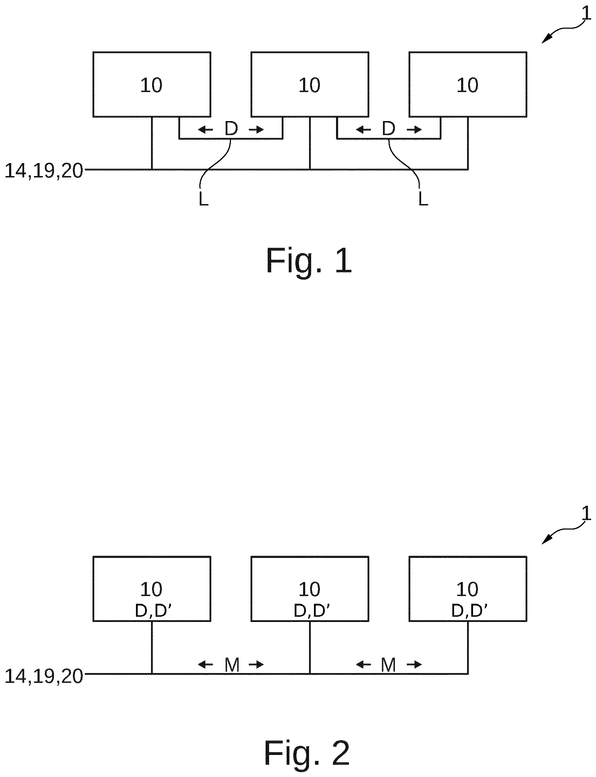

In Fig. 1 ist ein Blockschaltbild dreier elektronischer Schaltungen 10 eines elektrischen Geräts 1 gemäß dem Stand der Technik dargestellt. Die einzelnen Schaltungsmodule 10 sind mit Energieversorgungsleitungen 14 verbunden. Bei den Energieversorgungsleitungen 14 kann es sich um Gleichstrom-Energieversorgungsleitungen 19 bzw. DC-Energieversorgungsleitungen oder auch Wechselstromenergieversorgungsleitungen 20 oder AC-Energieversorgungsleitungen handeln. Die Übertragung von Daten D erfolgt üblicherweise über eigene Datenübertragungsleitungen L, welche mit eigenen Steckverbindungen (nicht dargestellt) mit den Schaltungsmodulen 10 verbunden werden. Abgesehen vom Platzbedarf und den Kosten solcher Steckverbinder für die Datenübertragungsleitung L zur Übertragung der Daten D zwischen den Schaltungsmodulen 10 des elektrischen Geräts 1 stellen diese Steckverbindungen mögliche Fehlerquellen dar. Es ist daher ein Ziel, die Steckverbindungen der Datenübertragungsleitungen 14 zu vermeiden.

Fig. 2 zeigt ein Blockschaltbild dreier Schaltungsmodule 10 eines elektrischen Geräts 1, wobei die Übertragung der Daten D erfindungsgemäß über die Energieversorgungsleitungen 14 erfolgt. Somit können die Datenübertragungsleitungen L und die dafür notwendigen Steckverbindungen entfallen. Zur Übertragung der Daten D über die Energieversorgungsleitungen 14 werden die in den Schaltungsmodulen 10 vorhandenen Steuereinrichtungen 11 mit ihren digitalen Schnittstellen 13 und ihren Speichern 12 in geeigneter Weise programmiert und die Daten D verarbeitet und Modulationssignale M gebildet, welche über entsprechende

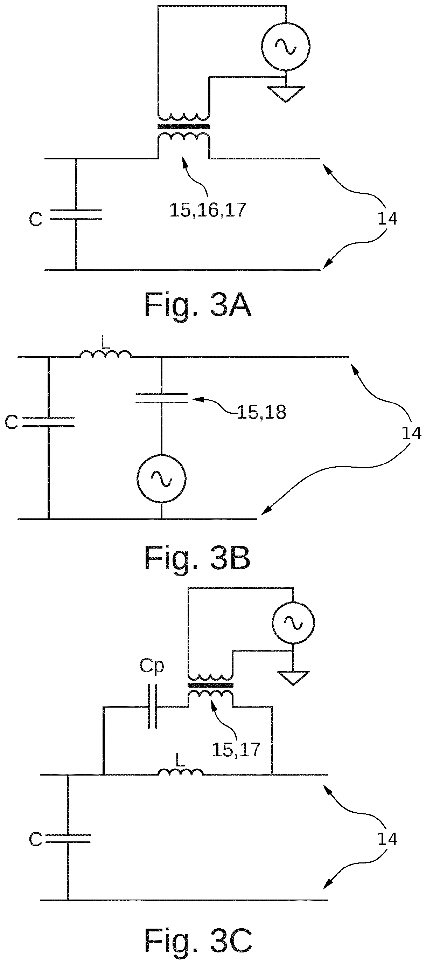

Koppelschaltungen 15 in die Energieversorgungsleitungen 14 eingekoppelt bzw. wieder ausgekoppelt werden (Details siehe Fig. 3A-3C, 4, 5 und 6). Der Aufwand für die Implementierung des Verfahrens und Realisierung der Vorrichtung ist relativ gering und kostengünstig.

Fig. 3A bis 3C zeigen beispielhaft verschiedene Varianten von Koppelschaltungen 15, mit welcher die Modulationssignale M mit den verarbeiteten Daten D' in die Energieversorgungsleitungen 14 eingekoppelt bzw. wieder ausgekoppelt werden können. Fig. 3A zeigt eine induktive Koppelschaltung 16, insbesondere einen Übertrager 17, über welchen das Modulationssignal M induktiv in die Energieversorgungsleitungen 14 eingekoppelt bzw. aus den Energieversorgungsleitungen 14 ausgekoppelt wird. Der Kondensator C (jeweils links in den Fig. 3A bis 3C) ist jeweils Teil der Spannungsversorgung, also beispielsweise deren Pufferkondensator oder Filterkondensator. Die Spannungsversorgung ist dabei für unterschiedliche Spannungslevels des Schaltmoduls 10 zuständig. Kann aber auch weitere Komponenten des elektrischen Geräts 1 versorgen.

Alternativ dazu zeigt Fig. 3B eine Koppelschaltung 15, welche in Form einer kapazitiven Koppelschaltung 18 realisiert wird, mit der das Modulationssignal M kapazitiv in die Energieversorgungsleitungen 14 eingekoppelt bzw. aus den Energieversorgungsleitungen 14 ausgekoppelt wird. Die Induktivität L hat die Funktion einer Entkopplungsdrossel zur Erhöhung der Koppelimpedanz.

Auch Mischformen von Koppelschaltungen 15 gemäß Fig. 3C zwischen der induktiven und kapazitiven Koppelschaltung sind möglich bzw. durch parasitäre Kapazitäten C_{P} bei einem induktiven Übertrager 17 auch die Realität.

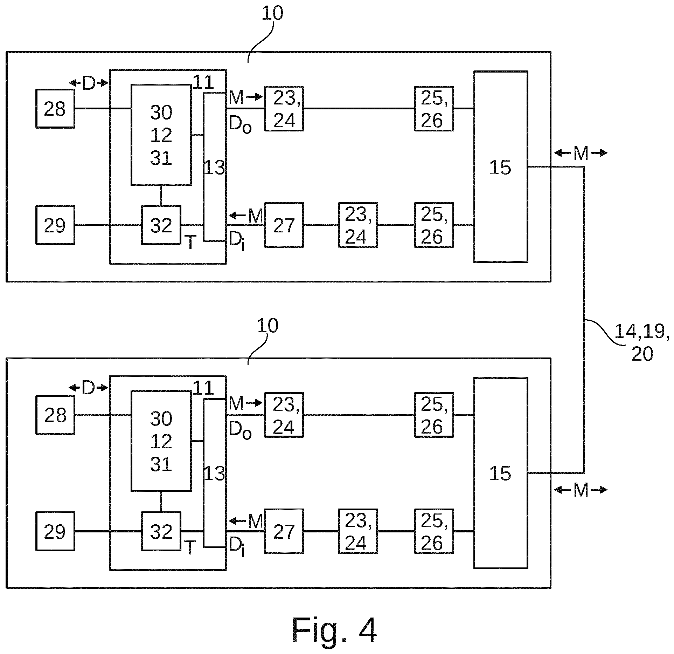

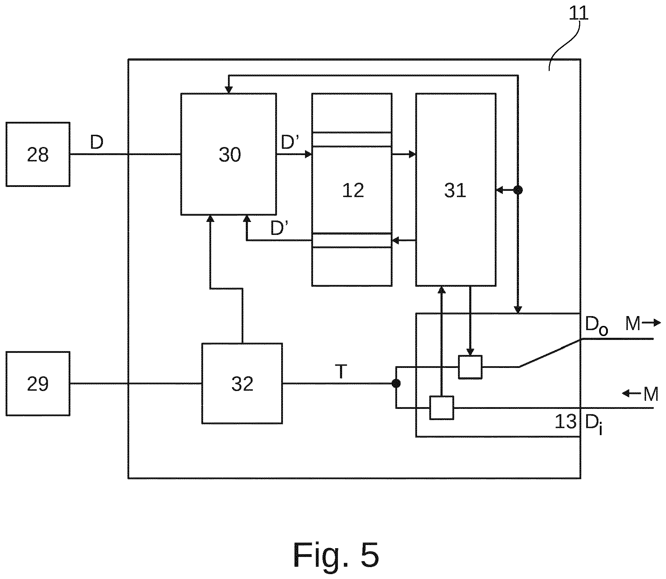

Fig. 4 zeigt ein detaillierteres Blockschaltbild zweier Schaltungsmodule 10 eines elektrischen Geräts 1, welche zur Durchführung des erfindungsgemäßen Verfahrens zur Datenübertragung über die Energieversorgungsleitungen 14 ausgebildet sind. Bei den Energieversorgungsleitungen 14 kann es sich um Gleichstrom-Energieversorgungsleitungen 19 oder Wechselstrom-Energieversorgungsleitungen 20 handeln. Jedes Schaltungsmodul 10 weist jeweils eine Steuereinrichtung 11 mit einem Speicher 12 und einer digitalen Schnittstelle 13 auf (im Detail in Fig. 5 erläutert). Bei der Steuereinrichtung 11 mit der digitalen Schnittstelle 13 handelt es sich vorzugsweise um einen Mikrocontroller mit einer SPI (Serial Peripheral Interface)-Schnittstelle, welche erfindungsgemäß in anderer Weise verwendet wird. Das Modulationssignal M wird lediglich über jeweils einen einzigen Port der Schnittstelle 13 gesendet und empfangen, weitere Ports der SPI-Schnittstelle werden nicht verwendet (siehe Fig. 5). Die Steuereinrichtung 11 ist mit einer Peripherie 28 verbunden, in welcher die zu übertragenden Daten D bereitgestellt werden bzw. die empfangenen Daten D abgelegt werden. Über einen Taktgeber 29 wird unter anderem ein Taktsignal T, mit dem die Daten D übertragen werden, festgelegt. Das Taktsignal T definiert die Geschwindigkeit der Übertragung entsprechend. Erfindungsgemäß ist in jedem Schaltungsmodul 10 eine Koppelschaltung 15 vorgesehen, welche die Verbindung zu den Energieversorgungsleitungen 14 bildet. Dabei werden die Daten D in Form der Modulationssignale M über die Energieversorgungsleitungen 14 übertragen. Zu diesem Zweck sind die Steuereinrichtungen 11 jedes Schaltungsmoduls 10 zur Datenübertragung der Daten D, zum Verarbeiten der Daten D und zur Bildung eines Modulationssignals M ausgebildet. In einem ersten Modulationsschritt werden aus den Daten D in der Steuereinrichtung 11 verarbeitete Daten D' gebildet. In einem zweiten Modulationsschritt wird aus den verarbeiteten Daten D' mit dem Taktsignal T das Modulationssignal M gebildet, welches über die Koppelschaltung 15 in die Energieversorgungsleitungen 14 eingekoppelt wird.

Vorzugsweise erfolgt die Datenübertragung auf eine nicht kohärente Weise, sodass keine Trägerrückgewinnung erforderlich ist. Insbesondere wird ein DBPSK (Differential Binary Phase Shift Keying)-Verfahren angewendet. Selbstverständlich sind auch andere Modulationsverfahren möglich. Die Datenübertragung (Senden und Empfangen) des Modulationssignals M erfolgt bevorzugt über PLC (Power Line Communication). Dabei wird das Modulationssignals M über die digitale Schnittstelle 13 der Steuereinrichtung 11 weitergeleitet und über die Koppelschaltung 15 in die Energieversorgungsleitungen 14 eingekoppelt und gesendet. Dabei wird das Modulationssignal M in einem Filter 23, insbesondere Tiefpassfilter 24, geglättet und in ein analoges Modulationssignal M umgewandelt und in einem Verstärker, insbesondere Operationsverstärker 26, verstärkt, bevor es die Koppelschaltung 15 erreicht. Die Koppelschaltung 15 kann durch eine induktive Koppelschaltung 16, insbesondere einen Übertrager 17 (siehe Fig. 3A), durch eine kapazitive Koppelschaltung 18 (siehe Fig. 3B) oder eine Mischform davon (siehe Fig. 3C) gebildet sein.

Zum Empfangen der Daten D wird das Modulationssignal M über die Koppelschaltung 15 des empfangenden Schaltungsmoduls 10 aus den Energieversorgungsleitungen 14 ausgekoppelt und gegebenenfalls einem Verstärker 25, insbesondere Operationsverstärker 26, und einem Filter 23, insbesondere Tiefpassfilter 24 zugeführt. Danach wird das Signal vorzugsweise in einem Formierer ("Shaper") 27 entsprechend geformt und das analoge Modulationssignal M digitalisiert und über die digitale Schnittstelle 13 der Steuereinrichtung 11 aufgenommen und softwaremäßig daraus die Daten D extrahiert und diese in der Peripherie 28 abgelegt werden.

Fig. 5 zeigt ein detailliertes Blockschaltbild einer Steuereinrichtung 11 eines Schaltungsmoduls 10. Die Steuereinrichtung 11 beinhaltet eine zentrale Verarbeitungseinheit 30 bzw. CPU (central processing unit), den Speicher 12, eine Speicherzugriffeinheit 31, einen Taktgenerator 32 und die digitale Schnittstelle 13. Der Taktgenerator 32 ist mit dem Taktgeber 29 bzw. einem Oszillator verbunden und legt das Taktsignal T fest, mit dem das Modulationssignal M übertragen wird. Ebenso wird damit der Takt für die zentrale Verarbeitungseinheit 30 erzeugt. An dieser Stelle sei auch angemerkt, dass das Taktsignal T für jedes Schaltungsmodul 10 identisch konfiguriert ist, sodass ein Datenaustausch möglich ist. Über die zentrale Verarbeitungseinheit 30 werden die in der Peripherie 28 bereitgestellten Daten D eingelesen und vorbereitet. Bei der Vorbereitung der Daten D (Adressierung, etc.) wird zusätzlich eine Redundanz für die Übertragungssicherheit ergänzt, sodass aus den Daten D ein Datenpaket bzw. im ersten Modulationsschritt verarbeitete Daten D' gebildet und in den Speicher 12 verschoben bzw. geschrieben werden. Die Speicherzugriffeinheit 31, insbesondere ein Direct Memory Access (DMA), hat Zugriff auf den Speicher 12 und stellt die verarbeiteten Daten D' bei Bedarf der Schnittstelle 13 zur Verfügung. In der Schnittstelle 13 werden im zweiten Modulationsschritt mit dem Taktsignal T die verarbeiteten Daten D' mit einer Timing Information ergänzt und das Modulationssignal M gebildet und anschließend gesendet.

Nach der Schnittstelle 13 erfolgt eine Filterung und eine Verstärkung des Signals, bevor das Modulationssignal M über die Koppelschaltung 15 in die Energieversorgungsleitungen 14 eingekoppelt wird (siehe Fig. 4). Bei der digitalen Schnittstelle 13 handelt es sich vorzugsweise um eine in der Steuereinrichtung 11 integrierte SPI-Schnittstelle, wobei diese erfindungsgemäß verwendet wird. Entsprechend derart, dass das Modulationssignal M lediglich über einen einzigen Port (Datenausgang Do) der Schnittstelle 13 gesendet wird. Weitere Ports der SPI-Schnittstelle sind zum Senden nicht erforderlich.

Beim Empfang der Daten D bzw. des Modulationssignals M wird dieses zunächst über die Koppelschaltung 15 aus den Energieversorgungsleitungen 14 ausgekoppelt und nach entsprechender Verstärkung, Filterung und Formierung bzw. Digitalisierung (siehe Fig. 4) über die Schnittstelle 13 aufgenommen (Dies erfolgt gemäß der erfindungsgemäßen Verwendung der SPI-Schnittstelle zum Empfangen einzig über den Port "Dateneingang Di"). Danach wird die Timing Information im ersten Demodulationsschritt aus dem Modulationssignal M entfernt und die verarbeiteten Daten D' im zweiten Demodulationsschritt extrahiert. Anschließend werden die verarbeiteten Daten D' an die Speicherzugriffseinheit 31 übergeben. Diese stellt es wiederum dem Speicher 12 zur Verfügung, sodass die zentrale Verarbeitungseinheit 30 darauf zugreifen kann, um die Daten D zu extrahieren/rückzugewinnen. Somit können die Daten D wieder der Peripherie 28 zur Verfügung gestellt werden.

Die Ports (Datenausgang Do, Dateneingang Di) für die erfindungsgemäße Verwendung der SPI-Schnittstelle sind in Fig. 5 entsprechend gekennzeichnet.

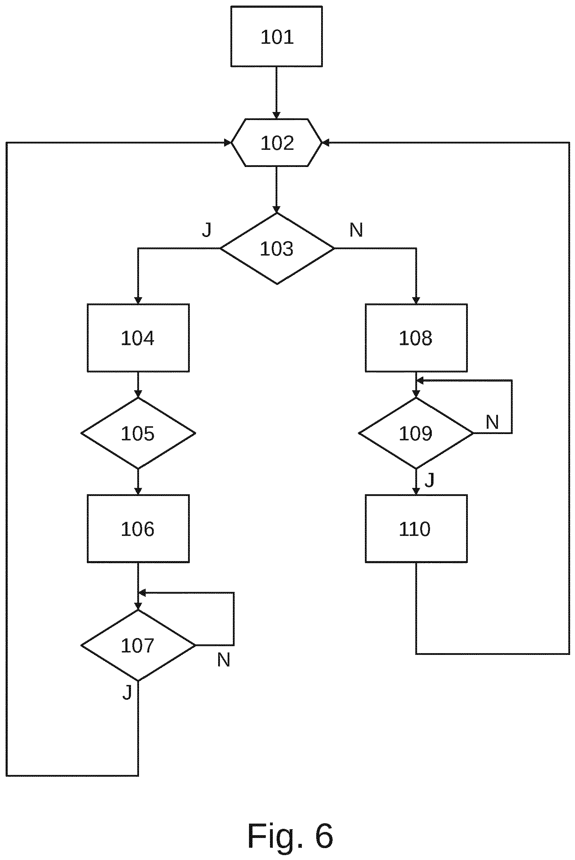

Schließlich zeigt Fig. 6 ein Flussdiagramm zur Veranschaulichung des erfindungsgemäßen Verfahrens. Das Verfahren startet mit einer Initialisierung (Block 101). Anschließend folgt ein Sammelblock 102 als Symbol für den Start einer Endlosschleife.

Wenn Daten D zum Senden anfallen (Abfrage 103) findet zunächst eine Vorverarbeitung der Daten D zu entsprechenden verarbeiteten Daten D', beispielsweise zu Datenpaketen, statt (Block 104). Dies erfolgt gemäß erstem Modulationsschritt in der zentralen Verarbeitungseinheit 30, wo ebenso die verarbeiteten Daten D' in den Speicher 12 geschrieben werden. Gemäß Block 105 wird in der Speicherzugriffeinheit 31 der Steuereinrichtung 11 die Empfangsmöglichkeit gesperrt, um ein Senden der Daten D zu ermöglichen. Zum Senden werden die verarbeiteten Daten D' vom Speicher 12 in die Speicherzugriffeinheit 31 und anschließend in die Schnittstelle 13 gelesen. In der Schnittstelle 13 wird im zweiten Modulationsschritt die Timing Information ergänzt, das Modulationssignal M gebildet und das Modulationssignal M gesendet (Block 106). Dadurch werden sämtliche Daten gesendet, bis der Sendevorgang abgeschlossen ist (Block 107). Nach dem erfolgten Sendeprozess wird wieder zu Block 102 gesprungen.

Liegen gemäß Abfrage (Block 103) keine Daten D zum Senden bereit, wird ein Empfangsmodus gestartet (Block 108). Im Empfangsmodus wird ein empfangener Bitstream, bestehend aus mehreren Datenblöcken mit den verarbeiteten Daten D' inklusive Störungen, mittels DMA in den Speicher 12 geschrieben und von der CPU auf enthaltene Daten D untersucht, bis die Daten D vollständig extrahiert bzw. rekonstruiert wurden (Block 109). Gemäß Block 110 werden aus dem empfangenen Modulationssignal M die verarbeiteten Daten D' im ersten Demodulationsschritt und schließlich die Daten D im zweiten Demodulationsschritt extrahiert/demoduliert. Danach können die rückgewonnenen Daten D an die Peripherie 28 übermittelt werden. Ist der Empfang abgeschlossen, wird wieder zu Block 102 zurückgesprungen.

Die oben beschriebenen Verfahrensschritte können relativ einfach softwaremäßig in den vorhandenen Steuereinrichtungen 11 der Schaltungsmodule 10 implementiert werden, sodass eine Übertragung der Daten D bzw. Modulationssignale M, welche die Daten D oder verarbeitete Daten D' enthalten, über die Energieversorgungsleitungen 14 ermöglicht wird und auf herkömmliche Datenübertragungsleitungen L mit eigenen Steckverbindungen verzichtet werden kann.

## Patentansprüche

1. Verfahren zur Übertragung von Daten (D) zwischen Schaltungsmodulen (10) eines elektrischen Geräts (1), beispielsweise eines Schweißgeräts, welche Schaltungsmodule (10) jeweils eine Steuereinrichtung (11) mit einem Speicher (12) und einer digitalen Schnittstelle (13) enthalten und mit Energieversorgungsleitungen (14) verbunden sind, **dadurch gekennzeichnet, dass** die Daten (D) über die Energieversorgungsleitungen (14) übertragen werden, wobei zum Senden die Daten (D) in der Steuereinrichtung (11) des Schaltungsmoduls (10) verarbeitet, aus den verarbeiteten Daten (D') mit einem Taktsignal (T) ein Modulationssignal (M) gebildet wird, und das Modulationssignal (M) über die digitale Schnittstelle (13) der Steuereinrichtung (11) weitergeleitet und über eine im Schaltungsmodul (10) vorgesehene Koppelschaltung (15) in die Energieversorgungsleitungen (14) eingekoppelt wird, und zum Empfangen das Modulationssignal (M) über die Koppelschaltung (15) aus den Energieversorgungsleitungen (14) ausgekoppelt und über die digitale Schnittstelle (13) der Steuereinrichtung (11) empfangen wird, und das Modulationssignal (M) über die Steuereinrichtung (11) demoduliert und daraus die Daten (D) extrahiert werden.

2. Verfahren nach Anspruch 1, **dadurch gekennzeichnet, dass** das Modulationssignal (M) über eine induktive Koppelschaltung (16), insbesondere einen Übertrager (17) induktiv in die Energieversorgungsleitungen (14) eingekoppelt bzw. aus den Energieversorgungsleitungen (14) ausgekoppelt wird.

3. Verfahren nach Anspruch 1 oder 2, **dadurch gekennzeichnet, dass** das Modulationssignal (M) über eine kapazitive Koppelschaltung (18) kapazitiv in die Energieversorgungsleitungen (14) eingekoppelt bzw. aus den Energieversorgungsleitungen (14) ausgekoppelt wird.

4. Verfahren nach einem der Ansprüche 1 bis 3, **dadurch gekennzeichnet, dass** die verarbeiteten Daten (D') über ein nicht-kohärentes Modulationsverfahren, insbesondere ein differentielles Modulationsverfahren, besonders bevorzugt durch ein DBPSK (Differential Binary Phase Shift Keying)-Verfahren, moduliert bzw. demoduliert werden.

5. Verfahren nach einem der Ansprüche 1 bis 4, **dadurch gekennzeichnet, dass** die Daten (D) zu Datenpaketen vorgegebener Länge (l_{D}) verarbeitet werden.

6. Verfahren nach einem der Ansprüche 1 bis 5, **dadurch gekennzeichnet, dass** das Modulationssignal (M) vor dem Einkoppeln in die Energieversorgungsleitungen (14) bzw. nach dem Auskoppeln aus den Energieversorgungsleitungen (14) gefiltert werden.

7. Verfahren nach einem der Ansprüche 1 bis 6, **dadurch gekennzeichnet, dass** das Modulationssignal (M) vor dem Einkoppeln in die Energieversorgungsleitungen (14) bzw. nach dem Auskoppeln aus den Energieversorgungsleitungen (14) verstärkt werden.

8. Vorrichtung zur Übertragung von Daten (D) zwischen Schaltungsmodulen (10) eines elektrischen Geräts (1), beispielsweise eines Schweißgeräts, welche Schaltungsmodule (10) jeweils eine Steuereinrichtung (11) mit einem Speicher (12) und einer digitalen Schnittstelle (13) enthalten und mit Energieversorgungsleitungen (14) verbunden sind, **dadurch gekennzeichnet, dass** in jedem Schaltungsmodul (10) eine Koppelschaltung (15) vorgesehen ist und die Daten (D) über die Energieversorgungsleitungen (14) übertragbar sind, indem die Steuereinrichtung (11) jedes Schaltungsmoduls (10) zum Senden der Daten (D) zum Verarbeiten der Daten (D) und zur Bildung eines Modulationssignals (M) aus den verarbeiteten Daten (D') mit einem Taktsignal (T) und zur Weiterleitung des Modulationssignals (M) über die digitale Schnittstelle (13) und zur Einkopplung des Modulationssignals (M) über die Koppelschaltung (15) in die Energieversorgungsleitungen (14) und zum Empfangen zum Auskoppeln des Modulationssignals (M) aus den Energieversorgungsleitungen (14) über die Koppelschaltung (15), dem Übertragen des Modulationssignals (M) über die digitale Schnittstelle (13) der Steuereinrichtung (11), zum Demodulieren des Modulationssignals (M) und daraus zum Extrahieren der Daten (D) ausgebildet ist.

9. Vorrichtung nach Anspruch 8, **dadurch gekennzeichnet, dass** die Steuereinrichtung (11) jedes Schaltungsmoduls (10) durch einen Mikrocontroller mit einer SPI (Serial Peripheral Interface)-Schnittstelle als digitale Schnittstelle (13) gebildet ist.

10. Vorrichtung nach Anspruch 8 oder 9, **dadurch gekennzeichnet, dass** die Koppelschaltung (15) durch eine induktive Koppelschaltung (16), insbesondere einen Übertrager (17), gebildet ist.

11. Vorrichtung nach einem der Ansprüche 8 bis 10, **dadurch gekennzeichnet, dass** die Koppelschaltung (15) durch eine kapazitive Koppelschaltung (18) gebildet ist.

12. Vorrichtung nach einem der Ansprüche 8 bis 11, **dadurch gekennzeichnet, dass** in jedem Schaltungsmodul (10) ein Filter (23), insbesondere ein Tiefpassfilter (24) zum Filtern des Modulationssignals (M) vor dem Einkoppeln in die Energieversorgungsleitungen (14) bzw. nach dem Auskoppeln aus den Energieversorgungsleitungen (14) vorgesehen ist.

13. Vorrichtung nach einem der Ansprüche 8 bis 12, **dadurch gekennzeichnet, dass** in jedem Schaltungsmodul (10) ein Verstärker (25), insbesondere ein Operationsverstärker (26), zum Verstärken des Modulationssignals (M) vor dem Einkoppeln in die Energieversorgungsleitungen (14) bzw. nach dem Auskoppeln aus den Energieversorgungsleitungen (14) vorgesehen ist.

14. Vorrichtung nach einem der Ansprüche 8 bis 13, **dadurch gekennzeichnet, dass** die Energieversorgungsleitungen (14) durch Gleichstrom-Energieversorgungsleitungen (19) gebildet sind.

15. Vorrichtung nach einem der Ansprüche 8 bis 14, **dadurch gekennzeichnet, dass** die Energieversorgungsleitungen (14) durch Wechselstrom-Energieversorgungsleitungen (20) gebildet sind.
